# EUROPÄISCHE PATENTSCHRIFT

(11) **EP 0 532 529 B1**
(45) Veröffentlichungstag und Bekanntmachung des Hinweises auf die Patenterteilung: **26.07.1995**
(21) Anmeldenummer: 91909470.6
(22) Anmeldetag: 23.05.1991
(51) Int. Cl.: G21C 17/007

(54) **HANDHABUNGSGERÄT UND VERFAHREN ZUM AUSFÜHREN VON ARBEITEN IM STUTZENBEREICH EINES BEHÄLTERS, INSBESONDERE FÜR ZERSTÖRUNGSFREIE PRÜFUNGEN**
MANIPULATOR AND PROCESS FOR CARRYING OUT WORK IN THE CONNECTION-PIPE REGION OF A VESSEL, IN PARTICULAR NON-DESTRUCTIVE TESTING
APPAREIL DE MANIPULATION ET PROCEDE POUR L'EXECUTION DE TRAVAUX DANS LA ZONE DES TUBULURES D'UN RECIPIENT, EN PARTICULIER POUR ESSAIS NON DESTRUCTIFS

(30) Priorität: 31.05.1990 DE 4017600
(43) Veröffentlichungstag der Anmeldung: 24.03.1993
(73) Patentinhaber: SIEMENS AKTIENGESELLSCHAFT, 80333 München (DE)
(72) Erfinder: DIRAUF, Franz, D-8629 Ebensfeld (DE); GOTTFRIED, Roland, D-8524 Neunkirchen (DE)
(86) Internationale Anmeldenummer: DE9100430
(87) Internationale Veröffentlichungsnummer: WO9119295

(56) Entgegenhaltungen:
- EP-A- 0 160 305
- DE-A- 3 147 296
- US-A- 4 474 064

## Beschreibung

Handhabungsgerät und Verfahren zum Ausführen von Arbeiten im Stutzenbereich eines Behälters, insbesondere für zerstörungsfreie Prüfungen

Die Erfindung bezieht sich auf ein Handhabungsgerät für Arbeiten im Stutzenbereich eines Behälters des Primärkreises in einem Kernkraftwerk, insbesondere für zerstörungsfreie Prüfungen. Die Erfindung bezieht sich auch auf ein Verfahren zum Hantieren eines Gerätes, insbesondere eines Prüfkopfes.

Die Leitungen des Primärkreises eines Kernkraftwerkes sind über Stutzen in den Druckbehälter eingeführt und durch Schweißen verbunden. Da der Stutzenbereich zu hochbeanspruchten Stellen gehört, wird er regelmäßig mit zerstörungsfreien Verfahren geprüft.

Es ist bekannt, derartige Prüfungen mit einem Handhabungsgerät durchzuführen, das einen radial zum Stutzen angeordneten Ausleger mit einem an diesem radial verschiebbaren Prüfkopf besitzt und auf einer Ringschiene, die den zu prüfenden Stutzen umgibt, aufgegleist wird. Um die erforderlichen Bewegungen bei den Prüfvorgängen auszuführen, verfügt das Handhabungsgerät über je einen Antrieb in Umfangsrichtung des Stutzens und in Radialrichtung. Der Ausleger in Radialrichtung wird durch mechanische Einrichtungen an die zu prüfende Behälteraußenwand angedrückt und tangential ausgerichtet. Der Behälter mit dem Stutzen ist von einem biologischen Schild und einer Isolierung umgeben. Da der Spalt zwischen dem Behälter und der Isolierung bzw. dem biologischen Schild teilweise sehr eng ist, ist das Einbringen des bekannten Handhabungsgerät in den Ringspalt sehr schwierig und nicht immer möglich, da die notwendige Bauhöhe des bekannten Auslegers den Einsatz bei sehr engem Ringspalt verbietet.

Bei der Prüfung muß der Prüfkopf auf konzentrischen oder elliptischen Bahnen um den Stutzen gefahren werden. Aufgrund von prüftechnischen Anforderungen ist es erforderlich, verschiedene Prüfköpfe zu verwenden, die im Verlauf einer Prüfung manuell ausgetauscht werden müssen. Die Prüfung wird erschwert durch die erhöhte Strahlung in der Nähe des Prüfobjektes sowie durch die beengten Raumverhältnisse. Der Prüfkopfwechsel erfordert bei den bekannten Vorrichtungen eine manuelle Demontage des Handhabungsgerätes und ist deshalb mit hohem Zeitaufwand und erheblicher Strahlenbelastung des Personals verbunden. Darüber hinaus ist das Umfahren von Hindernissen im Prüfbereich nicht immer möglich, da der radiale Ausleger einen Grundrahmen mit einer sich über die gesamte Länge erstreckenden Spindel zum Bewegen des Prüfkopfes besitzt und dadurch sehr ausladend ist.

Der Erfindung liegt die Aufgabe zugrunde, ein Handhabungsgerät anzugeben, das leichter als bisher in den Ringspalt eingebracht werden kann und auch in engen Ringspalten arbeiten kann. Darüber hinaus soll es das Handhabungsgerät ermöglichen, die Zeit für den Wechsel des Prüfkopfes zu verkürzen und die Strahlenbelastung für das Bedienungspersonal zu verringern.

Der Erfindung liegt ferner die Aufgabe zugrunde, ein Verfahren anzugeben, das ein fernbedientes Hantieren eines Gerätes oder Prüfkopfes mit einem Handhabungsgerät bei beengten Raumverhältnissen ermöglicht.

Die erstgenannte Aufgabe wird erfindungsgemäß gelöst durch ein Handhabungsgerät für Arbeiten im Stutzenbereich eines Behälters des Primärkreises in einem Kernkraftwerk, insbesondere für zerstörungsfreie Prüfungen, bei dem an zwei in Umfangsrichtung des Stutzens bewegbaren Wagen eine Schere angeordnet ist, deren zwei Arme mit ihren einen Enden jeweils in einem an den Wagen angeordneten Fußgelenk gelagert sind und mit ihren anderen Enden über ein Scheitelgelenk miteinander verbunden sind, an dem ein Träger für ein Werkzeug oder einen Prüfkopf angeordnet ist.

Auf diese Weise wird eine schlanke Bauform erzielt, die es ermöglicht, das Handhabungsgerät in beengten Freiräumen einzusetzen und Hindernisse im zu prüfenden Bereich zu umfahren. Durch die Verstellung der Arme kann der Radius der Prüfspur verkleinert werden, wobei sich die Baugröße des Manipulators verringert. Das Handhabungsgerät ist nicht nur für Prüfzwecke, sondern auch für Hantierungsaufgaben im Stutzenbereich von Behältern einsetzbar.

Zum Durchführen von Arbeiten im Stutzenbereich eines Behälters des Primärkreises in einem Kernkraftwerk ist erfindungsgemäß ein Verfahren vorgesehen, bei dem ein Hantierungsgerät, welches an zwei in Umfangsrichtung des Stutzens bewegbaren Wagen eine Schere umfaßt, deren zwei Arme mit ihren einen Enden jeweils in einen an den Wagen angeordneten Fußgelenk gelagert sind und mit ihren anderen Enden über ein Scheitelgelenk miteinander verbunden sind, an dem ein Träger für ein Werkzeug oder einen Prüfkopf angeordnet ist, wobei die Lage der Wagen mittels je eines Antriebsmotors eingestellt wird, der Prüfkopf bzw. das Werkzeug mittels auf die Arme wirkenden Federn, insbesondere pneumatisch/ hydraulischen Zylindern, an die Behälterwand gedrückt wird, und das Scheitelgelenk durch Änderung der Position mindestens eines Wagens mittels einer auf die Antriebsmotoren wirkenden Steuereinrichtung auf einer vorgegebenen Bahn gesteuert wird.

Vorteilhafte Weiterbildungen der Erfindung sind in den Unteransprüchen angegeben.

In der Zeichnung ist ein Ausführungsbeispiel der Erfindung dargestellt. Darin zeigen
- FIG 1: eine Seitenansicht eines Handhabungsgerätes zum Prüfen eines Behälters im Bereich eines Rohrstutzens;
- FIG 2: eine Ansicht des Handhabungsgerätes gemäß FIG 1 und
- FIG 3: einen Teilschnitt zu Figur 1 (Fußgelenk).

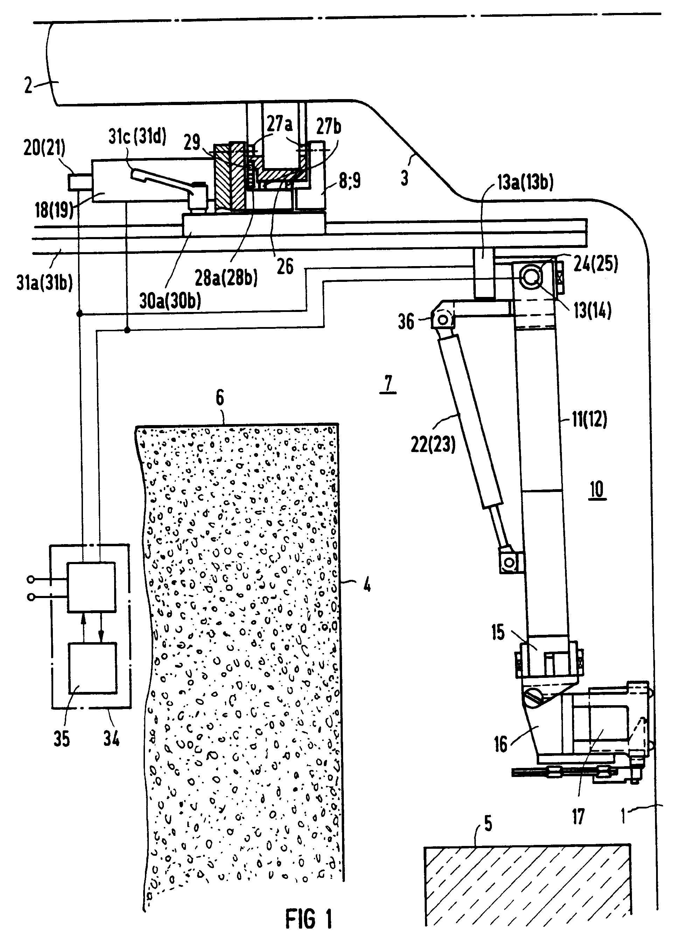

In Figur 1 ist in einen Behälter 1 eine Rohrleitung 2 über einen Stutzen 3 eingeführt und durch Schweißen verbunden. Der Behälter 1 ist von einem biologischen Schild 4 und einer Wärmeisolierung 5 umgeben. An der Einmündungsstelle der Rohrleitung hat der biologische Schild eine Öffnung 6, die meist rechteckförmig ausgebildet ist.

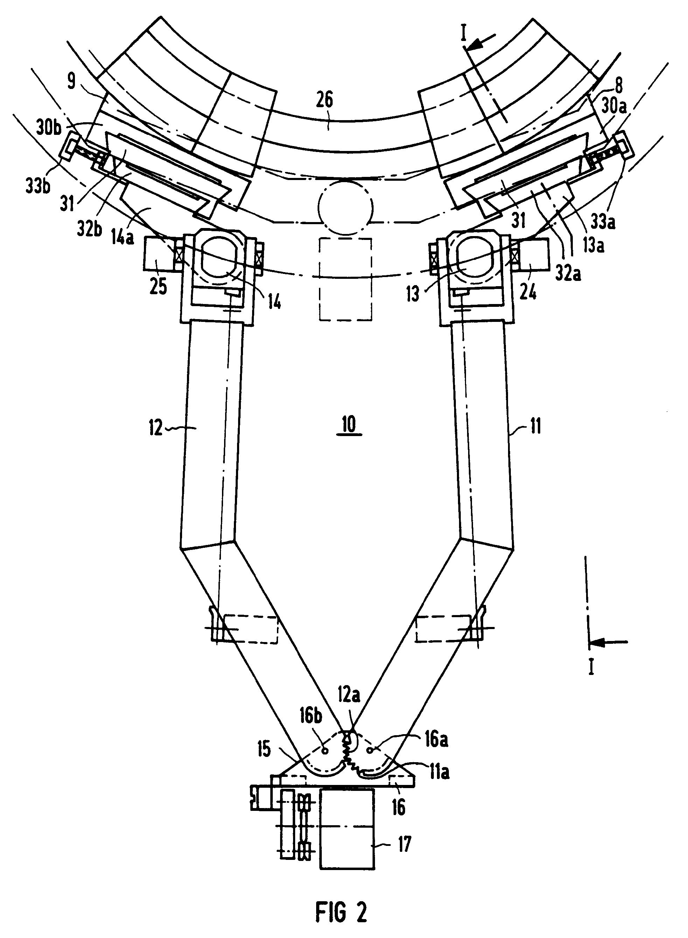

Das Handhabungsgerät 7 umfaßt - wie in Figur 2 zu sehen ist - zwei in Umfangsrichtung des Stutzens 3 bewegbare Wagen 8, 9 und eine Schere 10. Diese Schere 10 hat zwei Arme 11, 12, welche mit ihren einen Enden in je einem an den Wagen 8, 9 angeordneten Fußgelenk 13 bzw. 14, gelagert sind, das als Kardangelenk oder Kugelgelenk ausgebildet ist. Die anderen Enden der Arme 11, 12 sind über ein Scheitelgelenk 15 miteinander verbunden. An dem Scheitelgelenk 15 ist ein Träger 16 mit einem Prüfkopf 17 angeordnet.

In vorteilhafter Weise umfaßt das Scheitelgelenk 15 je ein an den Enden der Arme 11, 12 angeordnetes Zahnkranzsegment 11a, 12a, wobei die Zahnkranzsegmente 11a, 12a miteinander in Eingriff stehen. Die Mittelpunkte der Zahnkranzsegmente 11a, 12a sind jeweils in einem Drehzapfen 16a, 16b gelagert. Die Drehzapfen sind an dem Träger 16 angebracht. Dadurch wird der Träger 16 bei einer Änderung des Winkels zwischen den beiden Armen 11, 12 und einer dadurch bedingten radialen Bewegung des Scheitelgelenks 15 immer in der winkelhalbierenden Achse zwischen den Armen 11, 12 ausgerichtet, d.h. er behält seine Winkellage bei.

Die Wagen 8, 9 haben die Gestalt eines Kreissegments und sind auf einer Ringschiene 26 in Umfangsrichtung des Rohres 2 verfahrbar. Die Wagen 8, 9 sind mittels Rollenpaaren 27a, 27b auf der Ringschiene 26 gelagert und werden jeweils durch einen Elektromotor 18 bzw. 19 mit Positionsgeber 20 bzw. 21 angetrieben. Die Motoren 18 bzw. 19 wirken über je ein Ritzel 28a (28b) auf eine gemeinsame kreisförmige Zahnstange 29.

An den Wagen 8, 9 ist jeweils eine Grundplatte 30a bzw. 30b angeordnet, auf der parallel zur Achse des Stutzens 3 mittels einer Klemmvorrichtung 31c bzw. 31d eine Führungsschiene 31a bzw. 31b festgeklemmt ist, auf welcher die Schere 7 eingeführt werden kann. Die Führungsschienen 31a, 31b dienen ferner dazu, den Abstand der Fußgelenke 13, 14 zu der Wand des Behälters 1 zu fixieren. Die Fußgelenke 13 und 14 der Schere sind jeweils über einen Steg 13a bzw. 14a mit einem Schuh 32a bzw. 32b verbunden, der in einer schwalbenschwanzförmigen Aussparung der Führungsschiene 31a bzw. 31b in Axialrichtung des Rohres 2 einstellbar geführt ist. Zum Fixieren der Lage dient eine Arretiereinrichtung 33a bzw. 33b.

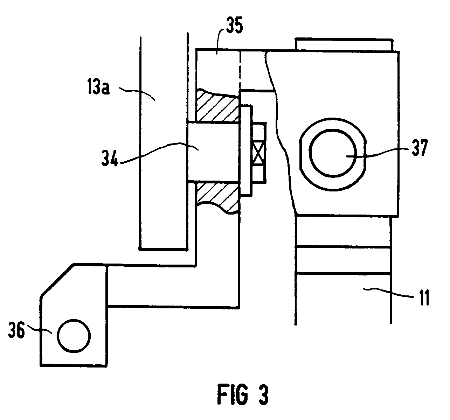

Zwischen den Schlitten 32a, 32b und den Armen 11, 12 ist je eine Feder 22 bzw. 23 angeordnet, um den Prüfkopf 17 bzw. ein Werkzeug an den zu prüfenden Wandbereich anzudrücken. Dabei können die Federn 22, 23 vorzugsweise als pneumatisch/hydraulische Zylinder ausgebildet sein. Wie Figur 3 zeigt, ist an dem Steg 13a ein Gelenkbolzen 34 angeordnet, an dem eine Konsole 35 drehbar gelagert ist. An dieser ist eine Öse 36 zur drehbaren Halterung der Feder 22 angeordnet. Ferner. ist an der Konsole 35 ein Gelenkbolzen 37 befestigt, an dem der Arm 11 gelagert ist. Die Anordnung bildet ein Kardangelenk.

An den Fußgelenken 13, 14 ist mindestens ein Winkelgeber 24 und/oder 25 zum Erfassen der Neigung wenigstens eines Armes 11 bzw. 12 gegenüber einer Bezugsebene vorgesehen. Die Motoren 18, 19, die zugeordneten Positionsgeber 20, 21 und die Winkelgeber 24, 25 sind mit einer eine Recheneinheit 35 enthaltenden Steuereinrichtung 34 für die Wagen 8, 9 verbunden.

Das Scheitelgelenk 15 wird durch Änderung der Position mindestens eines Wagens 8, 9 mittels der auf die Antriebsmotoren 18, 19 wirkenden Steuereinrichtung 34 radial in eine vorgegebene Position gefahren. Durch gleichzeitiges und gleichsinniges Verfahren beider Wagen 8, 9 kann der Prüfkopf 17 oder ein Werkzeug entlang einer Kurve verfahren werden, deren Mittelpunkt in der Stutzenachse liegt. Durch eine andere koordinierte Steuerung der Antriebsmotoren 18, 19 läßt sich eine beliebige Prüfbahn in radialer Richtung und in Umfangsrichtung des Stutzens einstellen.

Zum Herausnehmen (Werkzeugwechsel, Prüfkopfwechsel) werden die beiden Wagen 8, 9 so weit auseinandergefahren, daß die Schere fast am Stutzen 3 aufliegt (gestrichelte Stellung in Figur 2).

Dann werden die Federn 22, 23 entspannt bzw. die pneumatisch/ hydraulischen Zylinder zurückgezogen, so daß der Prüfkopf 17 nicht mehr an der Behälterwand anliegt und die Schere 10 nach Lösen der Klemmvorrichtung 31c, 31d mit den Führungsschienen 31a, 31b aus der Öffnung 6 herausgezogen werden kann.

## Patentansprüche

1. Handhabungsgerät für Arbeiten in einem Stutzenbereich eines Behälters (1) des Primärkreises in einem Kernkraftwerk, insbesondere für zerstörungsfreie Prüfungen, bei dem an zwei in Umfangsrichtung des Stutzens (3) bewegbaren Wagen (8, 9) eine Schere (10) angeordnet ist, deren zwei Arme (11, 12) mit ihren einen Enden jeweils in einem an den Wagen (8, 9) angeordneten Fußgelenk (13; 14) gelagert sind und mit ihren anderen Enden über ein Scheitelgelenk (15) miteinander verbunden sind, an dem ein Träger (16) für ein Werkzeug oder einen Prüfkopf (17) angeordnet ist.

2. Handhabungsgerät nach Anspruch 1, bei dem das Scheitelgelenk (15) je ein an den Enden der Arme (11, 12) angeordnetes Zahnkranzsegment (11a, 12a) umfaßt, wobei die Zahnkranzsegmente (11a, 12a) miteinander in Eingriff stehen und die Mittelpunkte der Zahnkranzsegmente (11a, 12a) jeweils in einem Drehzapfen (16a, 16b) gelagert sind, der an dem Träger (16) angebracht ist.

3. Handhabungsgerät nach einem der vorhergehenden Ansprüche, bei dem zwischen den Wagen (8, 9) und den Armen (11, 12) je eine Feder (22; 23), insbesondere ein pneumatisch/hydraulischer Zylinder, angeordnet ist, um das Werkzeug bzw. den Prüfkopf (17) an den zu prüfenden Bereich anzudrücken, wobei mindestens ein Winkelgeber (24; 25) zum Erfassen der Neigung wenigstens eines Armes (11 bzw. 12) gegenüber einer Bezugsebene vorgesehen ist.

4. Handhabungsgerät nach Anspruch 2 oder 3, bei dem jedem Fahrgestell (8, 9) ein Antriebsmotor (18, 19) mit Positionsgeber (20, 21) zugeordnet ist, die Positionsgeber (20, 21) und der Winkelgeber (24, 25) mit einer eine Rechnereinrichtung (35) enthaltenden Steuereinrichtung (34) für die Antriebsmotoren (18, 19) der Wagen (8,9) verbunden ist.

5. Handhabungsgerät nach einem der Ansprüche 1 bis 4, bei dem die beiden Fußgelenke (13, 14) als Kardangelenke ausgebildet sind.

6. Verfahren zum Durchführen von Arbeiten im Stutzenbereich eines Behälters des Primärkreises in einem Kernkraftwerk mit einem Hantierungsgerät, bei dem an zwei in Umfangsrichtung des Stutzens (2) bewegbaren Wagen (8, 9) eine Schere (10) angeordnet ist, deren zwei Arme (11, 12) mit ihren einen Enden jeweils in einem an den Wagen (8, 9) angeordneten Fußgelenk (13, 14) gelagert sind und mit ihren anderen Enden über ein Scheitelgelenk (15) miteinander verbunden sind, an dem ein Träger (16) für ein Werkzeug oder einen Prüfkopf (17) angeordnet ist, wobei die Lage der Wagen (8, 9) mittels je eines Antriebsmotors (18; 19) eingestellt wird, das Werkzeug bzw. der Prüfkopf mittels auf die Arme (11, 12) wirkenden Federn (22, 23), insbesondere pneumatisch/hydraulischen Zylindern, an die Behälterwand gedrückt wird, und das Scheitelgelenk (15) durch Änderung der Position mindestens eines Wagens (8 bzw. 9) mittels einer auf die Antriebsmotoren (18, 19) wirkenden Steuereinrichtung (34) in eine vorgegebene Position und/oder auf einer vorgegebenen Bahn gesteuert wird.

## Claims

1. Manipulator for work in a connecting-piece area of a container (1) of the primary circuit in a nuclear power station, in particular for non-destructive tests, in which a shears-type device (10) is arranged on two vehicles (8, 9) moveable in the circumferential direction of the connecting piece (3), the two arms (11, 12) of which shears-type device are mounted with their one end in each case in a hinged support (13; 14) arranged on the vehicles (8, 9) and are connected to one another with their other ends by way of a crown hinge (15), on which a support (16) is arranged for a tool or a test head (17).

2. Manipulator according to claim 1, in which the crown hinge (15) comprises in each case a toothed ring segment (11a, 12a) arranged at the ends of the arms (11, 12), whereby the toothed ring segments (11a, 12a) are engaged with one another and the centre points of the toothed ring segments (11a, 12a) are in each case mounted in a pivot pin (16a, 16b) which is fitted to the support (16).

3. Manipulator according to one of the preceding claims, in which between the vehicles (8, 9) and the arms (11, 12) in each case a spring (22; 23), in particular a pneumatic/hydraulic cylinder, is arranged in order to press the tool or the test head (17) against the area to be tested, whereby at least one angle encoder (24; 25) is provided to detect the inclination of at least one arm (11 or 12) relative to a reference plane.

4. Manipulator according to claim 2 or 3, in which a drive motor (18, 19) with position encoder (20, 21) is associated with each truck (8, 9), the position encoders (20, 21) and the angle encoder (24, 25) are connected to a control device (34) containing a computer device (35) for the drive motors (18, 19) of the vehicles (8, 9).

5. Manipulator according to one of claims 1 to 4, in which the two hinged supports (13, 14) are constructed as Cardan joints.

6. Process for carrying out work in the connecting-piece area of a container of the primary circuit in a nuclear power station with a handling device, in which a shears-type device (10) is arranged on two vehicles (8, 9) moveable in the circumferential direction of the connecting piece (2), the two arms (11, 12) of which shears-type device are mounted with their one end in each case in a hinged support (13, 14) arranged on the vehicles (8, 9) and are connected to one another with their other ends by way of a crown hinge (15), on which a support (16) for a tool or a test head (17) is arranged, whereby the position of the vehicles (8, 9) is adjusted in each case by way of a drive motor (18; 19), the tool or the test head is pressed against the container wall by means of springs (22, 23) acting on the arms (11, 12), in particular pneumatic/hydraulic cylinders, and the crown hinge (15) is controlled by changing the position of at least one vehicle (8 or 9) by means of a control device (34), acting on the drive motors (18, 19), into a predetermined position and/or on a predetermined path.

## Revendications

1. Appareil de manipulation pour des travaux à exécuter dans une partie de tubulure d'un récipient (1) d'un circuit primaire dans une centrale nucléaire, notamment pour des contrôles non destructifs, dans lequel sur les deux chariots (8,9) déplaçables dans la direction circonférentielle de la tubulure (3) est prévu un dispositif en ciseaux (10), dont les deux branches (11,12) sont supportées, par des premières extrémités, respectivement dans une articulation de base (13;14) disposée sur le chariot (8,9), et sont reliées entre elles, par leurs autres extrémités, au moyen d'une articulation sommitale (15), sur laquelle est disposé un support (16) pour un outil, ou une tête de contrôle (17).

2. Appareil de manipulation suivant la revendication 1, dans lequel l'articulation sommitale (15) comprend respectivement un segment de couronne dentée (lla, 12a), disposée sur les extrémités des bras (11,12), les segments de couronne dentée (11a,12a) engrenant entre eux, tandis que les centres des segments de couronne dentée (11a, 12a) sont tourillonnés respectivement sur un tourillon (16a, 16b), qui est monté sur le support (16).

3. Appareil de manipulation suivant l'une des revendications précédentes, dans lequel respectivement un ressort (22;23), notamment un vérin pneumatique/hydraulique, est disposé entre les chariots (8,9) et les branches (11,12), de manière à repousser l'outil ou la tête de contrôle (17) contre la zone à contrôler, au moins un capteur d'angle (24; 25) étant prévu pour détecter l'inclinaison d'au moins une branche (11,12) par rapport à un plan de référence.

4. Appareil de manipulation suivant la revendication 2 ou 3, dans lequel à chaque châssis mobile (8, 9) est associé un moteur d'entraînement (18,19) possédant des capteurs de position (20,21), et dans lequel les capteurs de position (20,21) et le capteur d'angle (24,25) sont reliés à un dispositif de commande (34), qui comporte un dispositif de calcul (35), pour les moteurs d'entraînement (18,19).

5. Appareil de manipulation suivant l'une des revendications 1 à 4, dans lequel les deux articulations de base (13,14) sont réalisées sous la forme d'articulations à la cardan.

6. Procédé pour exécuter des travaux dans la partie d'une tubulure d'un récipient du circuit primaire dans une centrale nucléaire comportant un appareil de manipulation, dans lequel sur les deux chariots (8,9) déplaçables dans la direction circonférentielle de la tubulure (3) est prévu un dispositif en ciseaux (10), dont les deux branches (11,12) sont supportées, par des premières extrémités, respectivement dans une articulation de base (13,14) disposée sur le chariot (8,9), et sont reliées entre elles, par leurs autres extrémités, au moyen d'une articulation sommitale (15), sur laquelle est disposé un support (16) pour un outil, ou une tête de contrôle (17), selon lequel la position des chariots (8,9) est réglée au moyen respectivement d'un moteur d'entraînement (18;19), l'outil ou la tête de contrôle est repoussé contre la paroi du récipient au moyen de ressorts (22,23), notamment de vérins pneumatiques/hydrauliques, qui agissent sur les bras (11,12) et l'articulation sommitale (15) est commandée dans une position prédéterminée et/ou sur une trajectoire prédéterminée, par modification de la position d'au moins un chariot (8 ou 9), à l'aide d'un dispositif de commande (34) agissant sur les moteurs d'entraînement (18,19).
